# EUROPEAN PATENT SPECIFICATION

(11) **EP 3 610 407 B1**
(45) Date of publication and mention of the grant of the patent: **20.01.2021**
(21) Application number: 18710898.0
(22) Date of filing: 20.03.2018
(51) Int. Cl.: G06F 21/78

(54) **ENCRYPTED MEMORY CARD**
VERSCHLÜSSELTE SPEICHERKARTE
CARTE MÉMOIRE CRYPTÉE

(30) Priority: 10.04.2017 EP 17305432
(43) Date of publication of application: 19.02.2020
(73) Proprietor: Thales Dis France SA, 92190 Meudon (FR)
(72) Inventor: LACOUTURE, Dominique, 92190 Meudon (FR); LAMBERT, Patrick, 92190 Meudon (FR); ROCHA FURTADO, Daniel, 92190 Meudon (FR)
(74) Representative: Bricks, Amélie
(86) International application number: PCT/EP2018/056994
(87) International publication number: WO 2018/188911

(56) References cited:
- GB-A- 2 460 143
- US-A1- 2006 059 093
- US-A1- 2015 379 286
- US-B1- 9 477 825

## Description

### FIELD OF THE INVENTION

The present invention relates to means for ensuring privacy of digital data and more particularly to a memory card storing data under an encrypted form.

### BACKGROUND OF THE INVENTION

Memory cards are used to store data on many electronic devices, such as photographic devices, film cameras, smart phones, computers... More and more users of such devices are concerned about the privacy of the data stored on such memory cards. Such users therefore need some way to protect such data from any unauthorized access.

Users using such memory cards in a professional context may have a particular need of a strong protection of the data stored on such memory cards and produced in the course of their professional activity. For example journalists working on sensitive topics and taking unauthorized pictures of locations or events may face serious issues if such pictures were discovered. It may also be needed to protect sensitive data stored on a memory card against any unauthorized access, even after a theft of the memory card and/or the electronic device in which it is inserted.

In order to protect data stored on memory cards, such data may be encrypted. Encryption indeed protects such data against any access by an individual that would not hold a decryption key or be aware of a decryption mechanism.

Existing solutions for data encryption on a memory card require using specific electronic devices, such as cameras, configured for handling on-the-fly encryption of any data written on a memory card inserted in such a device. Consequently, such existing solutions are not compatible with existing electronic devices that are not able to handle on-the-fly encryption. As a result, any user already owning an existing device that does not enable encryption would have to acquire such a specific device enabling encryption, if any exists, in order to have his data protected. This can be an issue from a financial point of view but also in terms of compatibility with the other pieces of equipment or software owned by the user, such as camera lenses.

Consequently, there is a need for a solution enabling encryption of data stored in memory cards and being compatible with any existing device recording data on such memory cards. Such a solution must particularly enable a decryption of encrypted data, in order to access it, but only in a way preventing access to encrypted data by an unauthorized user

Patent document GB2460143 discloses controlling access to a data store on a device connectable to a computer, wherein the device includes location sensing means, which is used to block access to encrypted data on the device when the computer is not at an authorized location.

### SUMMARY OF THE INVENTION

For this purpose and according to a first aspect, this invention therefore relates to a memory card comprising a memory, a processor, an interface and a positioning system,
said memory card being configured for being inserted in a user apparatus, for storing a first encryption key generated depending on intended geo-parameter values and for,
- when a command for writing first data in said memory is received from said user apparatus on the interface, encrypting said first data with said first encryption key by the processor and storing said encrypted first data in said memory,
- when a user command for reading said first data stored in said memory is received from said user apparatus on the interface:
   - obtaining current geo-parameter values from said positioning system,
   - generating by said processor from the obtained current geo-parameter values a second encryption key and an associated decryption key,
   - verifying if said first and second encryption keys match and when the keys match, decrypting said encrypted first data stored in said memory by the processor with said decryption key and outputting said decrypted encrypted first data to said user apparatus on said interface.

It enables protecting by encryption any data written on the memory card. It also enables the user to conveniently decrypt the encrypted data stored on the memory only at a specific location.

It enables also to authorize decryption only when the current geo-parameters meet some conditions, without storing in the memory card the decryption key or any information on the authorized location for decryption.

This memory card may comprise further a secure element storing a master secret random value,
said first encryption key may be generated from a predetermined elliptic curve, a curve generator point of said elliptic curve, intended geo-parameter values, said master secret random value and a predetermined key derivation function,
and said memory card may be configured for: when a user command for reading said first data stored in said memory is received from said user apparatus on the interface, generating by said processor said decryption key from said obtained current geo-parameter values, said master secret random value and said predetermined key derivation function, and generating said second encryption key from said predetermined elliptic curve, said curve generator point of said elliptic curve and said decryption key.

The memory card according to the first aspect may be configured for storing non intended geo-parameter values, and for destroying encrypted first data stored in the memory when said memory card obtains from said positioning system said non intended geo-parameter values.

Therefore, the user may erase the memory of the memory card if an attempt to read the content of the memory card is performed when such non intended geo-parameter values are met, in order to permanently prevent any access to it by an illegitimate user.

The memory card may be also configured for verifying if the difference between memory card's geo-parameter values obtained from the positioning system at a first time and at second time following the first time doesn't exceed a predetermined threshold and for decrypting said encrypted first data stored in said memory when the verification is a success.

It enables to counter attacks using a fake GPS signal in order to make the positioning system provide a fake location, by checking that the variation of location between two successive reading attempts is realistic.

The memory card may be also configured for when several user commands for reading said first data stored in said memory are received from said user apparatus on the interface, verifying using said positioning system if said memory card follows a specific geographical path and when said memory card follows correctly said specific geographical path, decrypting said encrypted first data stored in said memory by the processor and outputting said decrypted encrypted first data to said user apparatus on said interface.

It enables to require from the user to follow a specific geographical path before decryption of data is authorized, therefore improving security of the encrypted data.

The memory card may be also configured for storing said decrypted encrypted first data in said memory.

By doing so, decrypted data can be accessed at later time after decryption, possibly at another location that the authorized location for decryption.

To the accomplishment of the foregoing and related ends, one or more embodiments comprise the features hereinafter fully described and particularly pointed out in the claims.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
- Figure 1 is a schematic illustration of a system according to the present invention;
- Figure 2 is a schematic illustration of a system according to an embodiment of the present invention;
- Figures 3a and 3b are schematic illustrations of a successful decryption and an unsuccessful decryption in a system according to an embodiment of the present invention;
- Figure 4 is a schematic illustration of a system during an enrollment step according to an embodiment of the present invention.

### DETAILED DESCRIPTION OF EMBODIMENTS OF THE INVENTION

In the description detailed below, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different, are not necessarily mutually exclusive. For example, a particular feature, structure, or characteristic described herein in connection with one embodiment may be implemented within other embodiments without departing from the spirit and scope of the invention. In addition, it is to be understood that the location or arrangement of individual elements within each disclosed embodiment may be modified without departing from the spirit and scope of the invention. The description detailed below is, therefore, not to be taken in a limiting sense, and the scope of the present invention is defined only by the appended claims, appropriately interpreted, along with the full range of equivalents to which the claims are entitled.

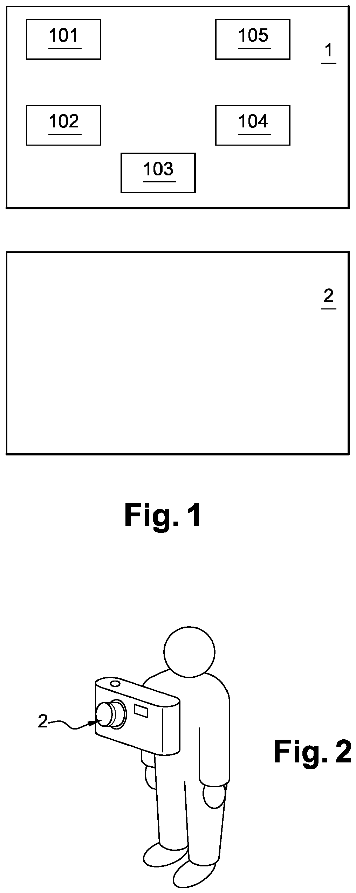

The invention aims at protecting by encryption any data written on a memory card 1, and to enable a safe but easy decryption of such data. As depicted on **figure 1****,** such a memory card may comprise a mass storage memory 101, a processor 102, an interface 103 and a positioning system 104. The memory 101 and the interface 103 may comply with any existing memory card standard, such as SD, SDHC, SDXC, microSD, CompactFlash, MemoryStick... card specifications. Other technical specifications of the memory card, such as its dimensions, or power consumption, may comply accordingly with a chosen standard.

The memory card 1 is configured for being inserted in a user apparatus 2. Such a user apparatus 2 may be any electronic device writing data to/reading data from a memory card. For example it may be a standard photo camera, as shown on figure 2, a film camera, a smartphone, a tablet, a computer, a TV... The memory card 1 is connected to the user apparatus 2 through the interface 103. The memory card may draw the power it needs from the user apparatus through the interface 103. The memory card and the user apparatus also communicate through the interface 103 in order to exchange read or write commands and the associated data.

In order to protect the data stored in its memory 101, the memory card 1 is configured for, when a command for writing first data in the memory 101 is received from the user apparatus 2 on the interface 103, encrypting said first data by the processor 102 and storing the obtained encrypted first data in the memory 101.

By doing so, any data to be stored on the memory card is first encrypted by the processor of the memory card. The user apparatus 2 does not need to be aware of such an encryption. The write command sent by the user apparatus 2 to the memory card 1 is a standard write command does not take into account data encryption. From the user apparatus point of view, data are just transmitted to the memory card for storage in the memory 101. Consequently any existing user apparatus may interact in this way with the memory card according to the invention in order to have data stored under an encrypted form in the memory card.

Since all data stored in the memory card is stored under an encrypted form, such data is protected against any reading by an unauthorized user who would not be able to decrypt the data.

Another aim of the invention is to enable decryption of the data stored on the memory card, for example by a user of the user apparatus, in a way that is convenient to the user while ensuring that no unauthorized user is able to decrypt the data stored on the memory card and get access to it.

In order to do so, decryption of data on the memory card may be authorized only in a specific predefined location, for example the legitimate user's office or home.

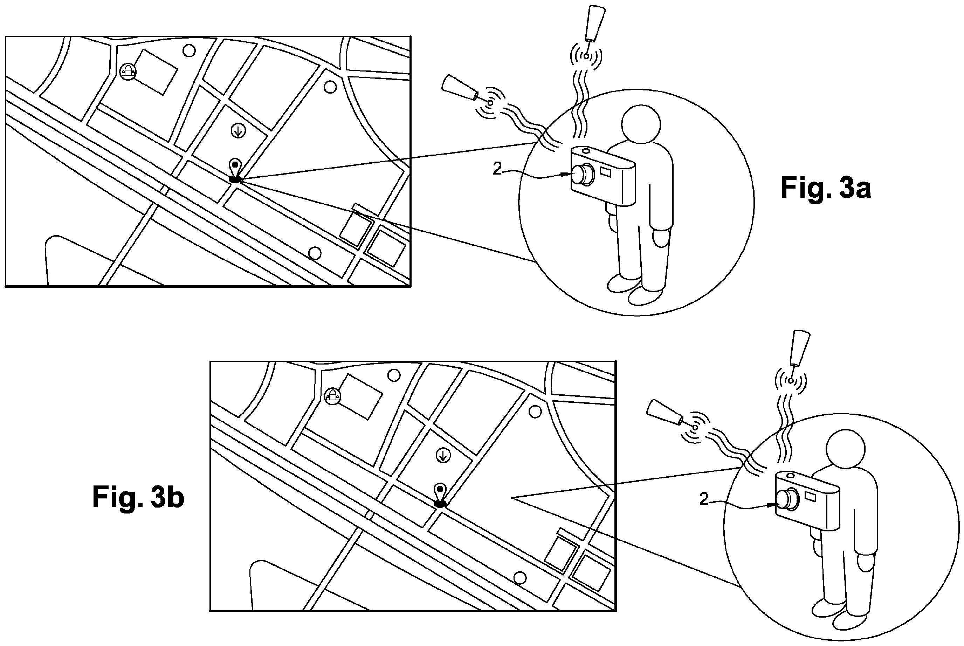

When a user command for reading first data stored in the memory 101 is received from the user apparatus 2 on the interface 103, the memory card may verify if it is in an authorized location for decryption using the positioning system 104 and when the memory card's location is authorized, the memory card may have the encrypted first data stored in the memory 101 decrypted by the processor 102 and output the obtained decrypted encrypted first data to the user apparatus 2 on the interface 103, as shown on **Figure 3a****.**

In this way, the legitimate user of the memory card has access to his data when located at the correct location, without any additional and cumbersome operation, but an illegitimate user trying to read the encrypted data and unaware of the location at which decryption is authorized or unable to get to this location remains unable to decrypt the encrypted data, as shown on **Figure 3b****.**

Since the positioning system 104 is integrated in the memory card, all the data decryption process, including the verification of the user's location, can be performed by the memory card itself without any dependency on any external system.

Especially, the user apparatus when asking for access to data stored in the memory card is neither aware that data must be/are decrypted nor that a verification is performed based on user's location. It also brings protection against attacks using forged location data that could be performed if such data was supplied by an external positioning system.

More precisely, the memory card 1 may be configured for storing a first encryption key Q generated depending on intended geo-parameter values GV describing the location at which decryption will be authorized, for example using latitude-longitude coordinates, and possibly altitude. The intended geo-parameters may also include additional parameters further defining a set of conditions for authorizing decryption, such as a direction and speed of movement, and/or temporal values such as date and time.

When a command for writing first data in the memory 101 is received, the memory card may encrypt the first data with the first encryption key Q.

When a user command for reading the first data stored in the memory 101 is received later on from the user apparatus 2 on the interface 103, the memory card may obtain current geo-parameter values GV' from the positioning system 104 and make the processor generate from the obtained current geo-parameter values a second encryption key Q' and an associated decryption key d'. The memory card may then verify if said first and second encryption keys Q and Q' match and when the keys match, it may have the encrypted first data stored in the memory 101 decrypted by the processor 102 with the decryption key d' and outputting the obtained decrypted encrypted first data to the user apparatus 2 on the interface 103. Encryption keys Q and Q' matching indeed proves that the memory card is located at the authorized location for decryption based on which the first encryption key was generated, and therefore that the data encrypted with the first encryption key Q can be decrypted with the generated decryption key d'.

The following paragraph discloses an example of practical implementation of such memory card configuration.

The memory card may further comprise a secure element 105 storing a master secret random value MS. Such a master secret random value MS can be used to derive encryption and decryption key and shall therefore remain secret, which is why it shall be safely stored in the memory card, for example in a tamper resistant secure element, such as a smartcard.

The first encryption key Q may be generated from a curve generator point G of a predetermined elliptic curve, the intended geo-parameter values GV, the master secret random value MS and a predetermined key derivation function KDF. For example Q = KDF(MS, GV).G with KDF = NIST SP800-108.

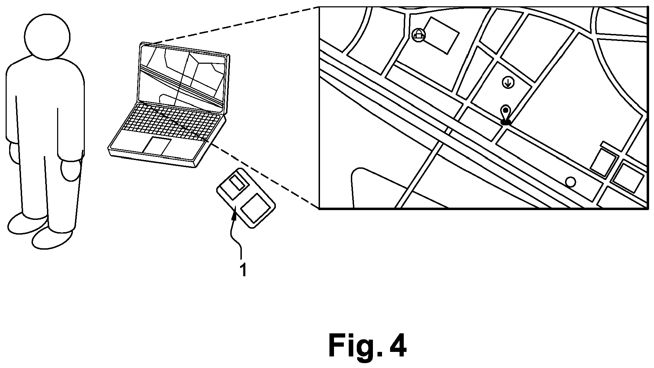

The master secret random value MS may be generated and stored in the secure element during manufacturing. The predetermined elliptic point, the curve generator point G, the intended geo-parameter values GV, and the predetermined key derivation function may be specified by the user for the first encryption key generation in an enrollment step during which the first encryption key depending on the intended geo-parameters GV is recorded in the memory card, as shown on **Figure 4****.** The predetermined elliptic point, the curve generator point G and the key derivation function may be memorized for further use in the memory of the memory card or in the secure element.

The memory card may be further configured for, when the user command for reading first data stored in the memory 101 is received from the user apparatus 2 on the interface 103, having the decryption key d' generated by said processor from the obtained current geo-parameter values GV', the master secret random value MS and the predetermined key derivation function KDF. The memory card may also be configured for generating the second encryption key Q' from the predetermined elliptic curve, the curve generator point of the elliptic curve G and the decryption key d'.

For example d' = KDF(MS, GV') and Q' = d'. G.

By doing so, the generated decryption key d' enables to decrypt any data that would be encrypted with the second encryption function Q'. In addition, if the memory card is located at the authorized location for decryption, the current geo-parameter values GV' are equal to the intended geo-parameter values GV and the second encryption key Q' is then equal to the first encryption key Q = KDF (MS, GV).G. As a result, the memory card can decrypt using the decryption key d' the data previously encrypted with the first encryption key Q and stored in the memory 101.

The key derivation function may take into account an accepted range for each of the geo-parameters, in order to generate the same first and second encryption keys when the difference between the current and intended geo-parameter values is within the accepted range for each parameter. In such a way, a tolerance may be defined for each parameter.

Such a configuration of the memory card has the advantage that neither the intended geo-parameter values GV describing the authorized location for decryption, nor the decryption key are stored in the memory card. Therefore, an attacker, even if he had access to the whole content of the memory and to the master secret random value MS, would not gain knowledge of the decryption key or of the authorized location for decryption, and wouldn't be able to decrypt encrypted data stored in the memory card.

Optionally, a special set of geo-parameter values may be set up in order to wipe out the memory if they are provided by the positioning system. In order to do so, the memory card may be configured for storing such non intended geo-parameter values, and for destroying encrypted first data stored in the memory when said memory card obtains from the positioning system said non intended geo-parameter values.

In order to counter attacks using a fake GPS signal in order to make the positioning system provide a fake location, the memory card may check the variation of location between two successive reading attempts is realistic. In order to do so, the memory card may be configured for verifying if the difference between memory card's geo-parameter values obtained from the positioning system at a first time and at second time following the first time doesn't exceed a predetermined threshold and for decrypting the encrypted first data stored in the memory 101 only when the verification is a success. The accepted geo-parameter values difference may increase with increasing time difference, taking into account a potential travel of the user.

In an embodiment, data may be cumulatively encrypted using several encryption keys generated depending on different geo-parameter values. In that case, in order to decrypt such multi-encrypted data, the user shall follow a path corresponding to the different sets of geo-parameter values corresponding to the encryption keys used to encrypt the data. The memory card may be configured for, when several user commands for reading said first data stored in said memory 101 are received from said user apparatus 2 on the interface 103, verifying using said positioning system if said memory card follows a specific geographical path and when said memory card follows correctly said specific geographical path, decrypting said encrypted first data stored in said memory 101 by the processor 102 and outputting said decrypted encrypted first data to said user apparatus 2 on said interface 103.

For example when data stored in the memory card are encrypted with several encryption keys stored in the memory, the memory card, when receiving a reading command may generate the second encryption key and the associated decryption key as described above, compare the second encryption key to all encryption keys stored in the memory, and in case there is a match it may memorize that the memory card was located at the authorized location for decryption corresponding to the matching encryption key, and the decryption key. It may then apply the same process at the next reading command, and so on until all decryption keys corresponding to the encryption keys memorized in the memory have been generated, ie until the user has followed all the specific geographical path required for decryption. The memory card may then decrypt the data using the generated decryption keys.

In an embodiment described above, decrypted data are just transmitted to the user apparatus. In addition, data decryption may be made permanent. In order to do so, the memory card may be configured for storing the decrypted encrypted first data in the memory 101.

As a result, the memory card according to the invention enables protecting by encryption any data written on the memory card. It also enables the user to conveniently decrypt the encrypted data stored on the memory only when geo-parameter values meet some conditions, therefore preventing any decryption by an unauthorized user. Moreover such a system may be used with any electronic user apparatus using such a memory card as storage means, without any specific configuration of such a user apparatus.

## Claims

1. A memory card (1) comprising a memory (101), a processor (102), an interface (103) and a positioning system (104),
said memory card being configured for being inserted in a user apparatus (2), for storing a first encryption key generated depending on intended geo-parameter values and for,
- when a command for writing first data in said memory (101) is received from said user apparatus (2) on the interface (103), encrypting said first data with said first encryption key by the processor (102) and storing said encrypted first data in said memory (101),
- when a user command for reading said first data stored in said memory (101) is received from said user apparatus (2) on the interface (103): obtaining current geo-parameter values (GV') from said positioning system (104),
- generating by said processor from the obtained current geo-parameter values a second encryption key and an associated decryption key,
- verifying if said first and second encryption keys match and when the keys match, decrypting said encrypted first data stored in said memory (101) by the processor (102) with said decryption key and outputting said decrypted encrypted first data to said user apparatus (2) on said interface (103).

2. The memory card of claim 1, comprising further a secure element (105) storing a master secret random value (MS),
wherein said first encryption key is generated from a predetermined elliptic curve, a curve generator point (G) of said elliptic curve, intended geo-parameter values (GV), said master secret random value (MS) and a predetermined key derivation function (KDF),
and wherein said memory card is configured for:
when a user command for reading said first data stored in said memory (101) is received from said user apparatus (2) on the interface (103), generating by said processor said decryption key from said obtained current geo-parameter values (GV'), said master secret random value (MS) and said predetermined key derivation function (KDF), and generating said second encryption key from said predetermined elliptic curve, said curve generator point of said elliptic curve (G) and said decryption key.

3. The memory card of claim 1, configured for storing non intended geo-parameter values, and for destroying encrypted first data stored in the memory when said memory card obtains from said positioning system said non intended geo-parameter values.

4. The memory card of claim 1, configured for verifying if the difference between memory card's geo-parameter values obtained from the positioning system at a first time and at second time following the first time doesn't exceed a predetermined threshold and for decrypting said encrypted first data stored in said memory (101) when the verification is a success.

5. The memory card of claim 1, configured for when several user commands for reading said first data stored in said memory (101) are received from said user apparatus (2) on the interface (103), verifying using said positioning system if said memory card follows a specific geographical path and when said memory card follows correctly said specific geographical path, decrypting said encrypted first data stored in said memory (101) by the processor (102) and outputting said decrypted encrypted first data to said user apparatus (2) on said interface (103).

6. The memory card of claim 1, configured for storing said decrypted encrypted first data in said memory (101).

## Patentansprüche

1. Speicherkarte (1), umfassend einen Speicher (101), einen Prozessor (102), eine Schnittstelle (103) und ein Positionierungssystem (104),
wobei die Speicherkarte konfiguriert ist zum Einsetzen in eine Benutzervorrichtung (2), Speichern eines ersten Verschlüsselungsschlüssels, der in Abhängigkeit von vorgesehenen Geoparameterwerten generiert wird, und,
- wenn ein Befehl zum Schreiben erster Daten in den Speicher (101) von der Benutzervorrichtung (2) auf der Schnittstelle (103) empfangen wird: Verschlüsseln der ersten Daten mit dem ersten Verschlüsselungsschlüssel durch den Prozessor (102) und Speichern der verschlüsselten ersten Daten in dem Speicher (101),
- wenn ein Benutzerbefehl zum Lesen der in dem Speicher (101) gespeicherten ersten Daten von der Benutzervorrichtung (2) auf der Schnittstelle (103) empfangen wird: Erhalten aktueller Geoparameterwerte (GV') von dem Positionierungssystem (104),
- Generieren eines zweiten Verschlüsselungsschlüssels und eines zugehörigen Entschlüsselungsschlüssels aus den erhaltenen aktuellen Geoparameterwerten durch den Prozessor,
- Überprüfen, ob der erste und der zweite Verschlüsselungsschlüssel übereinstimmen, und, wenn die Schlüssel übereinstimmen: Entschlüsseln der in dem Speicher gespeicherten verschlüsselten ersten Daten (101) durch den Prozessor (102) mit dem Entschlüsselungsschlüssel und Ausgeben der entschlüsselten verschlüsselten ersten Daten an die Benutzervorrichtung (2) auf der Schnittstelle (103).

2. Speicherkarte nach Anspruch 1, ferner umfassend ein sicheres Element (105), das einen geheimen Hauptzufallswert (MS) speichert,
wobei der erste Verschlüsselungsschlüssel aus einer vorbestimmten elliptischen Kurve, einem Kurvengeneratorpunkt (G) der elliptischen Kurve, vorgesehenen Geoparameterwerten (GV), dem geheimen Hauptzufallswert (MS) und einer vorbestimmten Schlüsselableitungsfunktion (KDF) generiert wird,
und wobei die Speicherkarte konfiguriert ist zum:
wenn ein Benutzerbefehl zum Lesen der in dem Speicher (101) gespeicherten ersten Daten von der Benutzervorrichtung (2) auf der Schnittstelle (103) empfangen wird, Generieren des Entschlüsselungsschlüssels aus den erhaltenen aktuellen Geoparameterwerten (GV'), dem geheimen Hauptzufallswert (MS) und der vorbestimmten Schlüsselableitungsfunktion (KDF) durch den Prozessor und Generieren des zweiten Verschlüsselungsschlüssels aus der vorbestimmten elliptischen Kurve, dem Kurvengeneratorpunkt der elliptischen Kurve (G) und dem Entschlüsselungsschlüssel.

3. Speicherkarte nach Anspruch 1, die konfiguriert ist zum Speichern nicht vorgesehener Geoparameterwerte und Zerstören verschlüsselter erster Daten, die in dem Speicher gespeichert sind, wenn die Speicherkarte von dem Positionierungssystem die nicht vorgesehenen Geoparameterwerte erhält.

4. Speicherkarte nach Anspruch 1, die konfiguriert ist zum Überprüfen, ob die Differenz zwischen den Geoparameterwerten der Speicherkarte, die ein erstes Mal und nach dem ersten Mal ein zweites Mal vom Positionierungssystem erhalten wurden, einen vorbestimmten Schwellenwert nicht überschreitet, und Entschlüsseln der ersten verschlüsselten Daten, die in dem Speicher (101) gespeichert sind, wenn die Überprüfung erfolgreich ist.

5. Speicherkarte nach Anspruch 1, die konfiguriert ist zum wenn mehrere Benutzerbefehle zum Lesen der in dem Speicher (101) gespeicherten ersten Daten von der Benutzervorrichtung (2) auf der Schnittstelle (103) empfangen werden, Überprüfen unter Verwendung des Positionierungssystems, ob die Speicherkarte einem bestimmten geografischen Pfad folgt, und wenn die Speicherkarte dem bestimmten geografischen Pfad korrekt folgt, Entschlüsseln der verschlüsselten ersten Daten, die in dem Speicher (101) gespeichert sind, durch den Prozessor (102) und Ausgeben der entschlüsselten verschlüsselten ersten Daten an die Benutzervorrichtung (2) auf der Schnittstelle (103).

6. Speicherkarte nach Anspruch 1, die konfiguriert ist zum Speichern der entschlüsselten verschlüsselten ersten Daten in dem Speicher (101).

## Revendications

1. Carte mémoire (1) comprenant une mémoire (101), un processeur (102), une interface (103) et un système de positionnement (104),
ladite carte mémoire étant configurée pour être insérée dans un appareil d'utilisateur (2), pour stocker une première clé de cryptage générée en fonction de valeurs de géoparamètres prévues et pour,
- lorsqu'une instruction d'écriture de premières données dans ladite mémoire (101) est reçue dudit appareil d'utilisateur (2) sur l'interface (103), crypter lesdites premières données avec ladite première clé de cryptage par le processeur (102) et stocker lesdites premières données cryptées dans ladite mémoire (101),
- lorsqu'une instruction d'utilisateur pour lire lesdites premières données stockées dans ladite mémoire (101) est reçue dudit appareil d'utilisateur (2) sur l'interface (103) : obtenir des valeurs de géoparamètres (GV') actuelles dudit système de positionnement (104),
- générer, par ledit processeur à partir des valeurs de géoparamètres actuelles obtenues, une seconde clé de cryptage et une clé de décryptage associée,
- vérifier si lesdites première et seconde clés de cryptage correspondent et, quand les clés correspondent, décrypter lesdites premières données cryptées stockées dans ladite mémoire (101) par le processeur (102) grâce à ladite clé de décryptage et délivrer lesdites premières données cryptées décryptées audit appareil d'utilisateur (2) sur ladite interface (103).

2. Carte mémoire selon la revendication 1, comprenant en outre un élément sécurisé (105) stockant une valeur aléatoire de secret maître (MS),
dans laquelle ladite première clé de cryptage est générée à partir d'une courbe elliptique prédéfinie, d'un point de générateur de courbe (G) de ladite courbe elliptique, de valeurs de géoparamètres (GV) voulues, de ladite valeur aléatoire de secret maître (MS) et d'une fonction de dérivation de clé (KDF) prédéfinie,
et dans laquelle ladite carte mémoire est configurée pour :
lorsqu'une instruction d'utilisateur pour lire lesdites premières données stockées dans ladite mémoire (101) est reçue dudit appareil d'utilisateur (2) sur l'interface (103), générer, par ledit processeur, ladite clé de décryptage à partir desdites valeurs de géoparamètres (GV') actuelles obtenues, de ladite valeur aléatoire de secret maître (MS) et de ladite fonction de dérivation de clé (KDF) prédéfinie et générer ladite seconde clé de cryptage à partir de ladite courbe elliptique prédéfinie, dudit point de générateur de courbe de ladite courbe elliptique (G) et de ladite clé de décryptage.

3. Carte mémoire selon la revendication 1, configurée pour stocker des valeurs de géoparamètres non voulues et pour détruire de premières données cryptées stockées dans la mémoire lorsque ladite carte mémoire obtient, dudit système de positionnement, lesdites valeurs de géoparamètres non voulues.

4. Carte mémoire selon la revendication 1, configurée pour vérifier si la différence entre des valeurs de géoparamètres de la carte mémoire obtenues à partir du système de positionnement à un premier instant et à un second instant après le premier instant ne dépasse pas un seuil prédéfini et décrypter lesdites premières données cryptées stockées dans ladite mémoire (101) lorsque la vérification est un succès.

5. Carte mémoire selon la revendication 1, configurée pour, quand plusieurs instructions d'utilisateur pour lire lesdites premières données stockées dans ladite mémoire (101) sont reçues depuis ledit appareil d'utilisateur (2) sur l'interface (103), vérifier, à l'aide dudit système de positionnement, si ladite carte mémoire suit un chemin géographique spécifique et, lorsque ladite carte mémoire suit correctement ledit chemin géographique spécifique, décrypter lesdites premières données cryptées stockées dans ladite mémoire (101) par le processeur (102) et délivrer lesdites premières données cryptées décryptées audit appareil d'utilisateur (2) sur ladite interface (103).

6. Carte mémoire selon la revendication 1, configurée pour stocker lesdites premières données cryptées décryptées dans ladite mémoire (101).
